# EUROPEAN PATENT SPECIFICATION

(11) **EP 0 622 943 B1**
(45) Date of publication and mention of the grant of the patent: **12.09.2001**
(21) Application number: 93830188.4
(22) Date of filing: 30.04.1993
(51) Int. Cl.: H04M 19/00, H04M 3/18

(54) **Power management circuit for a subscriber line interface circuit**
Leistungs-Steuerschaltung für eine Teilnehmerleitungsschnittstellenschaltung
Circuit de contrôle de puissance pour un circuit d'interface de ligne d'abonné

(43) Date of publication of application: 02.11.1994
(73) Proprietor: STMicroelectronics S.r.l., 20041 Agrate Brianza (Milano) (IT)
(72) Inventor: Pasetti, Mauro, I-20151 Milano (IT); Saviotti, Vanni, I-20052 Monza (MI) (IT); Torazzina, Aldo, I-20046 Biassono (MI) (IT)
(74) Representative: Botti, Mario

(56) References cited:
- EP-A- 0 182 475
- EP-A- 0 185 213
- EP-A- 0 482 466
- GB-A- 2 199 719

## Description

This invention relates to a circuit for handling power dissipation through telephone subscriber line power supply interface devices, in particular a monolithically integratable telephone interface devices.

Further, the invention relates to a circuit for handling power dissipation through a telephone subscriber line power supply interface device using a pair of amplifier final stages provided with output terminals which are coupled to the line and comparator circuit means effective to compare the mean value of the longitudinal current on the line with a predetermined threshold value.

The incorporation of such devices to telephone exchanges of ever more compact design requires that new designs be evolved for circuits and systems to provide improved power distribution and active power control under any operating conditions.

Power distribution consists of using an auxiliary element (e.g. an external transistor) connected to each interface device, which auxiliary element is effective to dissipate some of the power.

Under certain exceptionally severe conditions of the line, and in the presence of longitudinal currents due to one or both of the line wires being temporarily connected to ground ("ground key" situation), or to failures in the line ("fault" situation), the dissipated power may fall outside the upper admissible limits by standard packages even in the presence of an external auxiliary element adapted to dissipate some of the power.

Longitudinal current has been defined in the telecommunication arts as being the current which flows from ground to one of either the tip or ring leads as discussed in published UK Patent Application No. GB -A-2 199 719.

Known in the art are arrangements for limiting the largest current supplied to the line, and hence the amount of power dissipated.

Such prior arrangements, while performing their expected function satisfactorily in normal operation of the telephone system, are unable to operate effectively when the line is subjected to a longitudinal or common mode current at a non-zero mean value.

In fact, when the load draws a longitudinal current from the supply line, the above-mentioned prior devices fail to perform their function because the cut-in threshold of the limiter arrangement is usually above the value of the current flowing through the line.

Telephone systems normally incorporate a thermal protection device which is operated upon the temperature reaching a predetermined upper threshold level to change the operational characteristics of the protected system and, consequently, discontinue its normal operation.

A circuit structure which enables dissipated power to be controlled even under a condition of line unbalance is described in European Patent Application No. 91117504.0 (publication number EP 0 482 466) by this Applicant.

That Application discloses amplifier final stages coupled to a subscriber line and a comparator circuit that compares a longitudinal current on the line with a threshold value. The Application also discloses a technique whereby in an unbalanced condition of the line, the power dissipated by the subscriber line interface circuit and the external transistor is reduced by limiting the line transversal current.

The line transversal current is known in the telecommunications arts as the current flowing from one of the tip and ring wires of the subscriber line to the other. (See EP 0 482 466, page 4, lines 24-27).

However, the circuit described there can only operate as expected when the transversal current limitation is able to limit the largest longitudinal current, which would only occur when the two line terminations operate in single-quadrant class B.

Another circuit structure for limiting the longitudinal current in a subscriber line is disclosed in published UK Patent Application No. GB -A-2 199 719. The circuit structure includes amplifier final stages coupled to a subscriber line and a differential amplifier that generates a DC signal such that a voltage corresponding to the detected longitudinal circuit is generated and applied only to the inverting input of the amplifier final stage corresponding to the tip lead of the line. The currents supplied to the amplifier output stages are unaffected by the DC signal generated by the differential amplifier.

Another circuit structure is shown in European Patent Application No. EP-A-0 182 475. That circuit structure includes a limiting amplifier 53 that limits the voltage supplied to the non-inverting inputs of output amplifiers 17, 18 in response to sensing common-mode signals on a telephone line.

It is a primary object of this invention to provide a circuit for handling power dissipation through a telephone subscriber line power supply interface device, which is effective to protect the aforesaid system even on the occurrence of line longitudinal currents larger than the transversal current, and accordingly, even in all those possible cases when either or both of the line wires are raised to any potential in the range from ground potential to the potential of the battery to which the device is connected.

In this way, additionally to ground-key situations, any possible failure situations in the line can be handled. Another object is to provide a circuit which can also provide effective protection for the external component(s) associated with the interface device to dissipate power.

The invention is directed to a circuit for handling power dissipation through a telephone subscriber line power supply interface device using a pair of amplifier final stages (4, 5) provided with output terminals which are coupled to the line (2) and comparator circuit means (6) effective to compare the mean value of the longitudinal current on the line with a predetermined threshold value, the comparator circuit means in turn driving a program unit (8) adapted to set respective limiting currents supplied to the amplifier final stages (4,5) and thereby limit the currents into the line from the amplifier final stages, characterized in that the program unit (8) comprises at least first (11) and second (12), as well as a third (13), reference circuit means effective to set, in the final stages of the device (4 and 5) to which they are coupled, predetermined different values for the largest admissible currents supplied to the line, resulting in the device power dissipation being controlled by limiting the largest current being supplied into the line according to the value of the longitudinal current present on the line.

A further object is to enable incorporation of the telephone subscriber line interface device to standard signal packages, including SMT (Surface Mount Technology) ones.

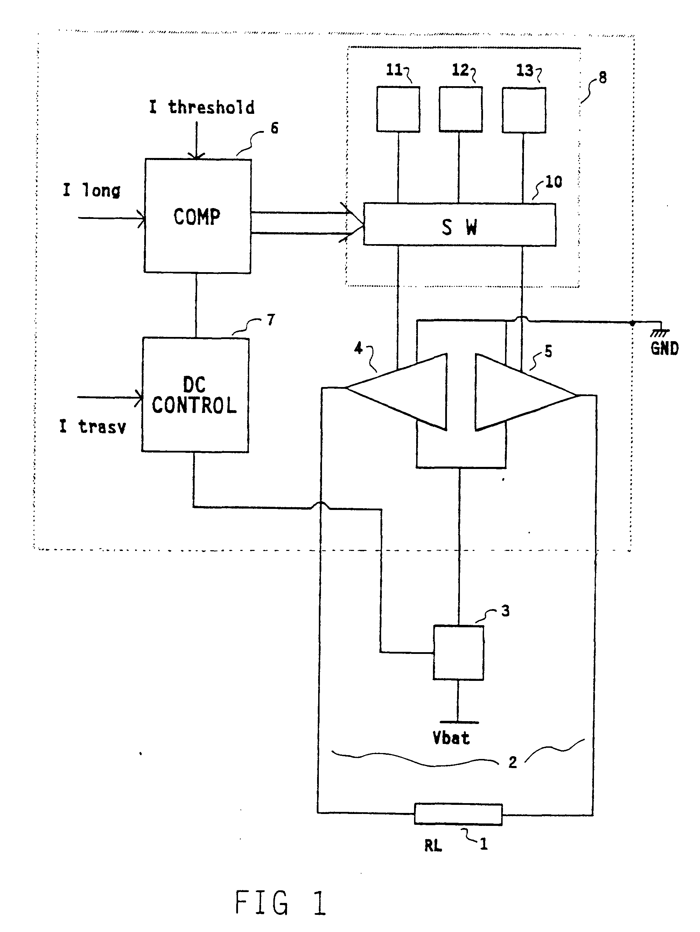

The invention features will become more clearly apparent from the following description and the accompanying drawing, in which Figure 1 shows diagramatically an embodiment of a circuit for handling power dissipation by a telephone subscriber line power supply interface device according to the invention.

The scheme shown diagramaticaly in the drawing comprises:
- a load 1 connected to a telephone subscriber line 2;
- two final amplifier stages 4 and 5 of an interface device coupled to the telephone line;
- circuit means, not shown in the drawing, for sensing the appearance of transversal currents and longitudinal currents on the line;
- connection and switching circuit means 10 for coupling the two final stages to reference circuit means 11, 12 and 13, said connecting and switching circuit means being driven by comparator circuit means 6 connected to the circuit means (not shown) for sensing longitudinal currents on the line; and
- an external power-dissipating component 3 connected to the final stages of the device and controlled by control circuit means 7 being responsive to transversal line currents and coupled to the comparator circuit means.

As shown in Figure 1, the connection and switching circuit means 10 and the reference circuit means 11, 12 and 13 together comprise a program unit 8.

The circuit shown in Figure 1 operates as follows. The two final stages 4 and 5 of the interface device are operative to supply a current into the telephone line 2 and to the external power-dissipating component 3 and are coupled, via the connection and switching circuit means 10, to the reference circuit means 11, 12 and 13 setting respective upper limiting currents in the two final stages 4 and 5.

The external component 3 is driven by the control circuit means 7 responsive to transversal line currents.

The connection and switching circuit means are controlled by the comparator circuit means 6.

Such comparator circuit means 6 will, through the connection and switching circuit means 10, enable connection of both final stages to the first reference circuit means 11 at mean values of the common mode current below a predetermined threshold value, whereas at mean values of that current above said threshold value, they will alternately enable connection of the device final stages to the second and the third reference circuit means according to the sense of the longitudinal current on the line.

Thus, the upper values of the current to be output from the final stages are lowered.

In addition, the comparator circuit means will disable the external component 3 through the control circuit means 7 on the occurrence of values of the line transversal current above a predetermined threshold value.

The second and third reference circuit means are effective to determine values of the largest output currents from the final stages which differ from each other by a larger value than threshold, thereby maintaining at all times a longitudinal current on the line whose value is greater than said threshold value.

The reference circuit means may be implemented using constant current sources whose values are compared with the current from the final stage.

The circuit means, not shown in the drawing, operative to sense transversal currents and longitudinal currents may be implemented as described in Italian Patent No. 1215254 to the Applicant. On the other hand, the comparator circuit means may be implemented by ordinary threshold comparators.

Lastly, the connection and switching circuit means may be simple electronic switches, e.g. bipolar transistors driven into conduction and cutoff.

The circuit described above has the following advantages over the prior art:
- it affords protection for an interface device to which it has been connected, as well as for external components associated therewith, in all those critical cases of line unbalance where either or both wires are brought to a potential whatever between ground and battery potentials; and
- it allows, by virtue of its ability to control power dissipation under any conditions, incorporation of the whole subscriber line interface device to a standard signal package, which brings about additional benefits in terms of occupied volume and cost.

It is understood that many modifications, adaptations, changes, and substitutions with equivalent elements may be made unto the embodiment described in the foregoing by way of non-limitative example, without departing from the protection scope of the appended claims.

## Claims

1. A circuit for handling power dissipation through a telephone subscriber line power supply interface device using a pair of amplifier final stages (4, 5) provided with output terminals which are coupled to the line (2) and comparator circuit means (6) effective to compare the mean value of the longitudinal current on the line with a predetermined threshold value, the comparator circuit means in turn driving a program unit (8) adapted to set respective limiting currents supplied to the amplifier final stages (4,5) and thereby limit the currents into the line from the amplifier final stages, **characterized in that** the program unit (8) comprises at least first (11) and second (12), as well as a third (13), reference circuit means effective to set, in the final stages of the device (4 and 5) to which they are coupled, predetermined different values for the largest admissible currents supplied to the line, resulting in the device power dissipation being controlled by limiting the largest current being supplied into the line according to the value of the longitudinal current present on the line.

2. A circuit according to Claim 1, **characterized in that** the program unit (8) further comprises connection and switching circuit means (10) connected between the final stages of the device and said comparator circuit means (6).

3. A circuit according to Claim 2, **characterized in that** the comparator circuit means (6) enable connection of both final stages to the first reference circuit means (11) at mean values of the longitudinal current below a predetermined threshold value, and at mean values of that current above said threshold value, enable connection of the device final stages, the one to the second (12) and the other to the third (13) of said reference circuit means, or vice versa, according to the sense of the common mode current on the line.

4. A circuit according to Claim 3, **characterized in that** the second and third reference circuit means are effective to set such values for the largest output currents from the final stages as to cause them to differ from each other by a larger value than the threshold value.

5. A circuit according to any of the preceding claims, and comprising at least one external component (3) effective to dissipate power connected to the interface device, that external component being driven into conduction by control circuit means (7) responsive to the transversal line current, **characterized in that** such control circuit means (7) are coupled to the comparator circuit means (6) and disable the external component upon the mean value of the longitudinal current exceeding the threshold value.

## Patentansprüche

1. Schaltung zur Kontrolle der Leistungsverluste durch ein Schnittstellengerät für den Netzanschluß einer Telefonteilnehmerleitung unter Verwendung von zwei Verstärkerendstufen (4, 5), versehen mit Ausgangsanschlüssen, angeschlossen an die Leitung (2), und Vergleicherschaltungsmittel (6) zum Vergleich des Mittelwertes des Längsstromes auf der Leitung mit einem vorbestimmten Grenzwert, wobei die Vergleicherschaltungsmittel wiederum eine Programmiereinheit (8) steuern, die dergestalt angepasst ist, daß sie entsprechende den Verstärkerendstufen (4, 5) zugeführte begrenzende einstellt und somit die von den Verstärkerendstufen in die Leitung gespeisten Ströme begrenzt, **dadurch gekennzeichnet, daß** die Programmiereinheit (8) mindestens eine erste (11) und eine zweite (12) sowie eine dritte (13) Referenzschaltung umfasst, dergestalt wirkend, daß sie in den Endstufen des Gerätes (4 und 5), mit dem sie gekoppelt sind, vorbestimmte, unterschiedliche Werte für die größten zulässigen, in die Leitung einzuspeisenden Ströme einstellen, was dazu führt, daß die Leistungsverluste des Gerätes durch die Begrenzung des größten, in die Leitung eingespeisten Stromes entsprechend dem Wert des in der Leitung vorhandenen Längsstromes geregelt werden.

2. Schaltung nach Anspruch 1 **dadurch gekennzeichnet, daß** die Programmiereinheit (8) weiterhin Verbindungs- und Schaltkreismittel (10) umfasst, angeschlossen zwischen der Endstufe des Gerätes und besagten Vergleicherschaltungsmittel (6) .

3. Schaltung nach Anspruch 2, **dadurch gekennzeichnet, daß** die Vergleicherschaltungsmittel (6) bei Durchschnittswerten des Längsstromes unter einem vorbestimmten Grenzwert die Verbindung beider Endstufen mit dem ersten Referenzschaltungsmittel (11) und bei Durchschnittswerten des Stromes über dem besagten Grenzwert die Verbindung der einen Endstufe des Gerätes mit dem zweiten (12) und der anderen mit dem dritten (13) der besagten Referenzschaltungsmittel ermöglicht oder umgekehrt, gemäß der Richtung des Gleichtaktstromes auf der Leitung.

4. Schaltung nach Anspruch 3, **dadurch gekennzeichnet, daß** das zweite und das dritte Referenzschaltungsmittel in der Weise wirken, daß sie Werte für die größten Ausgangsströme der Endstufen einstellen, die sich um einen Wert von einander unterscheiden, der größer ist als der Grenzwert.

5. Schaltung nach einem der vorstehenden Ansprüche, und beinhaltend mindestens einen externen Bauteil (3), der so wirkt, daß er die an das Schnittstellengerät angekoppelten Leistung abgibt, wobei dieser externe Bauteil von einem Steuerschaltungsmittel (7), das auf den Querstrom auf der Leitung reagiert, in die Leitfähigkeit gesteuert wird, **dadurch gekennzeichnet, daß** besagte Steuerschaltungsmittel (7) mit den Vergleicherschaltungsmitteln (6) gekoppelt sind und den externen Bauteil sperren, wenn der Mittelwert des Längsstromes den Grenzwert überschreitet.

## Revendications

1. Circuit de gestion de la dissipation de puissance d'un dispositif d'interface pour l'alimentation d'une ligne téléphonique d'abonné par l'intermédiaire d'un pair d'étages finals amplificateurs (4, 5) ayant bornes de sortie connectées à la ligne (2) et moyens de circuit comparateurs (6) agencés pour comparer la valeur moyenne du courant longitudinal sur la ligne avec une valeur de seuil prédéterminée, les moyens de circuit comparateurs commandant à leur tour une unité de programmation (8) agencée pour déterminer de respectifs courants maximums pouvant être délivrés aux étages finals amplificateurs (4, 5) et, par conséquent, pour limiter les courants sur la ligne à partir des étages finals amplificateurs, **caractérisé en ce que** l'unité de programmation (8) comprend au moins un premier (11), un deuxième (12) et un troisième (13) moyens de circuit de référence agencés pour déterminer dans les étages finals du dispositif (4 et 5), auxquels ils sont connectés, de valeurs différentes et prédéterminées des courants maximums pouvant être délivrés à la ligne, la dissipation de puissance du dispositif étant donc réglée par limitation du courant maximum délivré à la ligne selon la valeur du courant longitudinal présent dans la ligne.

2. Circuit selon la revendication 1 **caractérisé en ce que** l'unité de programmation (8) comprend en outre moyens de circuit de connexion et commutation (10) insérés entre les étages finals du dispositif et lesdits moyens de circuit comparateurs (6).

3. Circuit selon la revendication 2, **caractérisé en ce que** les moyens de circuit comparateurs (6) activent la connexion des étages finals au premier moyen de circuit de référence (11) pour valeurs moyennes du courant longitudinal inférieures à une valeur de seuil prédéterminée et, pour valeurs moyennes dudit courant supérieures à ladite valeur de seuil, ils activent la connexion de l'un des étages finals du dispositif au deuxième (12) moyen de circuit de référence et de l'autre au troisième (13) moyen, ou vice versa, selon la direction du courant de mode commun sur la ligne.

4. Circuit selon la revendication 3 **caractérisé en ce que** le deuxième et le troisième moyens de circuit de référence sont agencés pour déterminer de telles valeurs des courants maximums, pouvant être délivrés par les étages finals, qui diffèrent entre elles d'une valeur supérieure à la valeur de seuil.

5. Circuit selon l'une quelconque des revendications précédentes et comprenant au moins un composant extérieur (3) agencé pour dissiper de la puissance et connecté au dispositif d'interface, ledit composant extérieur étant activé à la conduction par l'intermédiaire de moyens de circuit de commande (7) sensibles aux courants transversaux de ligne, **caractérisé en ce que** lesdits moyens de circuit de commande (7) sont connectés aux moyens de circuit comparateurs (6) et désactivent le composant extérieur si la valeur moyenne du courant longitudinal de ligne dépasse la valeur de seuil.
